# FASCICULE DE BREVET EUROPEEN

(11) **EP 2 743 182 B1**
(45) Date de publication et mention de la délivrance du brevet: **30.10.2019**
(21) Numéro de dépôt: 13196684.8
(22) Date de dépôt: 11.12.2013
(51) Int. Cl.: B64D 11/04, B64D 11/00

(54) **Meuble pour aéronef comportant des moyens de distribution d'un chariot entre deux parties**
Möbelstück für Luftfahrzeug, das Verteilungsmittel eines Transportwagens zwischen zwei Bereichen umfasst
Cabinet for aircraft comprising a means for distributing a cart between two portions

(30) Priorité: 14.12.2012 FR 1262067
(43) Date de publication de la demande: 18.06.2014
(73) Titulaire: Airbus Opérations SAS, 31060 Toulouse (FR)
(72) Inventeur: Durand, Yves, 31840 AUSSONNE (FR); Guering, Bernard, 31850 MONTRABE (FR)
(74) Mandataire: Ilgart, Jean-Christophe

(56) Documents cités:
- GB-A- 2 131 779
- US-A- 5 314 143
- US-A1- 2005 133 308
- US-A1- 2005 230 540
- US-A1- 2009 294 394
- US-B1- 6 305 643
- US-B1- 6 454 208
- US-B1- 6 464 169

## Description

### DOMAINE TECHNIQUE

La présente invention se rapporte au domaine des meubles pour aéronef, notamment les meubles d'office. De tels meubles d'office sont en particulier désignés par le terme « galley » en anglais, qui se réfère classiquement aux cuisines de l'aéronef au sens large. Toutefois, l'invention ne se limite pas à un tel domaine d'utilisation, même si celui-ci est privilégié, et prévoit également l'usage du meuble pour d'autres types d'application, notamment pour le stockage d'éléments dans un aéronef, par exemple des vêtements, des bagages, du matériel de secours, du matériel audiovisuel, entre autres.

L'invention concerne plus spécifiquement un aéronef comportant un meuble, ainsi qu'un procédé de stockage et/ou d'utilisation d'un chariot associé.

L'invention trouve son application dans le domaine de l'aéronautique, notamment pour l'équipement des cabines des aéronefs, par exemple des aéronefs commerciaux de taille moyenne.

### ÉTAT DE LA TECHNIQUE ANTÉRIEURE

La cabine d'un aéronef est en premier lieu destinée aux passagers, et donc à l'intégration des sièges pour passagers. C'est ainsi le nombre de sièges que l'on est capable d'intégrer dans la cabine qui permet de déterminer la rentabilité économique de l'aéronef. La concurrence étant de plus en plus forte, il est souhaitable d'optimiser au mieux l'aménagement de la cabine pour permettre l'intégration d'un nombre toujours plus important de sièges pour passagers afin d'augmenter la rentabilité d'un aéronef.

Or, dans le cadre de l'aménagement d'une cabine d'aéronef, il est nécessaire de prévoir, en plus des sièges pour passagers, un nombre conséquent de fonctionnalités additionnelles, qui réduisent la capacité d'intégration des sièges dans la cabine et donc la rentabilité de l'aéronef. Il peut s'agir principalement, dans le pont supérieur pressurisé de l'aéronef, de la cabine de pilotage, des portes et sorties d'évacuation, des dispositifs de rangement, des toilettes, des meubles d'office permettant généralement le stockage et la préparation de l'alimentation dédiée aux passagers. La présente invention concerne plus spécifiquement le cas des meubles d'office dans leur utilisation habituelle privilégiée liée à l'alimentation des passagers et également dans une utilisation de stockage d'éléments divers pour l'aéronef.

Les meubles d'office (ou « galleys » en anglais) comprennent généralement des meubles techniques très spécifiques dédiés au stockage de la nourriture ainsi qu'à leur préparation. Pour ce qui concerne la préparation de la nourriture, les meubles d'office disposent principalement des fonctions suivantes : fours, distributeurs de boisson, lavabos, poubelles, rangements, entre autres. Pour ce qui concerne le stockage de la nourriture, les meubles d'office comprennent des chariots (ou « trolleys » en anglais) qui sont acheminés au fur et à mesure du besoin en cabine par les hôtesses de l'air. Ces chariots, munis de roulettes verrouillables, sont suffisamment étroits pour pouvoir circuler le long d'un couloir de la cabine. Le besoin en chariots d'un aéronef dépend principalement du nombre de passagers présents dans l'aéronef et de l'aménagement de la cabine en fonction des différentes classes. A titre d'exemple, un avion de taille moyenne d'une capacité d'environ 200 passagers nécessite de prévoir environ 14 chariots.

Les chariots sont généralement stockés au bas des meubles d'office ou alors, compte-tenu du nombre souvent élevé de ces chariots, dans un ou plusieurs meubles additionnels qui s'apparentent davantage à de simples meubles de stockage plutôt qu'à des meubles d'office prévus pour cuisiner. A titre d'exemple, pour l'avion de taille moyenne d'environ 200 passagers, les 14 chariots peuvent être répartis dans des meubles d'office situés à proximité des portes avant d'accès et d'évacuation. Par conséquent, l'intégration dans la cabine des meubles d'office prélève un volume très important dans la cabine qui empêche l'intégration de sièges supplémentaires pour passagers, et diminue ainsi la rentabilité économique de l'aéronef.

Des solutions ont déjà été proposées dans l'art antérieur pour limiter la pénalité en cabine des intégrations traditionnelles des meubles d'office, afin d'augmenter le volume disponible de la cabine pour l'intégration de sièges.

On connaît par exemple une solution consistant à intégrer les chariots en soute, en prévoyant un élévateur pour faire remonter les chariots et en disposer au niveau du meuble d'office principal en cabine. Néanmoins, une telle solution est contraignante car elle nécessite le plus souvent une assistance manuelle pour la remontée des chariots et implique un prélèvement de volume important à la fois en cabine et en soute. De plus, la nécessité de prévoir des moyens d'accès la rend difficilement applicable à un avion de taille moyenne. Une telle solution est connue du document GB 2 131 779 A.

Une autre solution connue prévoit l'augmentation de la densité de stockage des chariots en cabine en superposant plusieurs niveaux de meubles d'office, en général deux ou trois niveaux, et en faisant appel à du matériel complexe d'extraction, semi-automatique ou automatique compte-tenu du poids important d'un chariot, par exemple d'environ 100 kg. Cette autre solution n'est également pas entièrement satisfaisante car la hauteur totale élevée des meubles d'office superposés rend son application difficile à un avion de taille moyenne. De plus, cette solution reste complexe à mettre en œuvre.

Par ailleurs, on sait que la structure classique du fuselage d'un aéronef, en particulier d'un avion commercial, est d'avoir un fond étanche pressurisé disposé en fond de cabine, en avant de la dérive, puis un volume non pressurisé de forme conique très évolutive dans lequel est intégré l'empennage horizontal de l'aéronef. Ce volume non pressurisé de forme conique ne permet pas, par construction, d'aménagement de type cabine.

Une solution connue est toutefois de déplacer le fond étanche pressurisé jusqu'à la limite du possible vers l'arrière de l'aéronef, en particulier jusqu'au compartiment où est intégré le générateur auxiliaire de puissance (ou APU pour « Auxiliary Power Unit » en anglais), et ceci en déportant l'empennage horizontal qui est alors intégré directement au bas de la dérive, comme c'est le cas par exemple pour l'avion du type Falcon de la société Dassault Aviation. De la sorte, il peut être possible de disposer d'un volume pressurisé supplémentaire important qui est en communication directe avec la cabine.

Ce volume pressurisé supplémentaire peut alors, dans le cas d'un aéronef de forte capacité qui présente une hauteur importante, être aménagé assez facilement. Néanmoins, dans le cas d'un aéronef de taille moyenne, la hauteur de ce volume pressurisé supplémentaire est très pénalisante car relativement faible puis fortement dégressive, de sorte que l'aménagement structurel de ce volume est fortement limité.

La demande de brevet US 2005/0133308 A1 décrit par ailleurs une solution de système de stockage et de distribution de chariots dans un aéronef.

### EXPOSÉ DE L'INVENTION

L'invention a pour but de remédier au moins partiellement aux besoins mentionnés ci-dessus et aux inconvénients relatifs aux réalisations de l'art antérieur.

L'invention vise notamment à permettre une optimisation de l'aménagement de la cabine d'un aéronef, en prévoyant notamment une optimisation de la conception des meubles, en particulier des meubles d'office, afin d'assurer un gain significatif dans l'exploitation de l'aéronef.

L'invention vise de même à proposer une intégration d'un meuble, notamment un meuble d'office, dans un aéronef qui soit la moins pénalisante en termes de volume pour la cabine de l'aéronef.

L'invention a ainsi pour objet, selon l'un de ses aspects, un aéronef selon la revendication 1. L'aéronef comporte un meuble intégré à l'arrière du fuselage de l'aéronef, dans un volume pressurisé situé au moins partiellement sous la dérive de l'aéronef. Le meuble comporte:
- une pluralité de chariots,
- une première partie formant interface d'utilisation pour un utilisateur permettant la prise et/ou la dépose d'au moins un chariot dans le meuble,
- une deuxième partie permettant la mise en circulation des chariots selon au moins des première et deuxième directions principales sensiblement perpendiculaires entre elles, au moins dans un plan de l'aéronef, pour le stockage et/ou l'acheminement vers l'utilisateur d'au moins un chariot,
la première partie et/ou la deuxième partie comportant des moyens de distribution d'au moins un chariot depuis la deuxième partie vers la première partie et inversement.

Grâce à l'invention, il peut être possible d'augmenter la capacité d'aménagement, et notamment le nombre de sièges pour passagers, dans la cabine d'un aéronef. De la sorte, la rentabilité de l'aéronef est améliorée. A titre d'exemple, un avion de taille moyenne d'environ 200 passagers peut voir sa capacité en intégration de sièges augmenter d'environ 8 sièges. En outre, l'intégration optimisée particulière permise par l'invention du meuble monobloc en partie arrière de l'aéronef, en particulier dans un volume pressurisé supplémentaire, peut permettre de contourner les contraintes habituelles liées à l'aménagement des meubles d'office dans l'aéronef et rendre l'aménagement global de la cabine plus facile à réaliser.

Le meuble compris dans l'aéronef selon l'invention peut en outre comporter l'une ou plusieurs des caractéristiques suivantes prises isolément ou suivant toutes combinaisons techniques possibles.

Le meuble peut par exemple être un meuble d'office.

Le meuble, et notamment la pluralité de chariots, peut permettre le stockage et/ou la préparation de nourriture. Le meuble, et notamment la pluralité de chariots, peut encore permettre le stockage d'éléments divers dans l'aéronef, par exemple des vêtements, des bagages, du matériel de secours, du matériel audiovisuel, entre autres.

Le meuble peut constituer un ensemble monobloc.

Lors de la mise en circulation des chariots, la deuxième partie peut être configurée pour permettre la libération d'un espace lors du déplacement d'un chariot, cet espace alors disponible étant destiné à être occupé par un autre chariot (principe de taquinage). En particulier, la capacité effective de stockage en chariots de la deuxième partie peut être limitée à un nombre de chariots inférieur ou égal au nombre de chariots selon la capacité maximale de stockage en chariots de la deuxième partie diminué d'un chariot, pour permettre la circulation de l'ensemble des chariots. Par exemple, pour une capacité maximale de stockage en chariots de la deuxième partie égale à 15 (autrement dit la deuxième partie peut recevoir au maximum 15 chariots), la capacité effective de stockage en chariots de la deuxième partie peut être limitée à un nombre de chariots inférieur ou égal à 14. Le au moins un espace (ou emplacement) ainsi laissant vacant (i.e. non occupé par un chariot) de la deuxième partie peut permettre la circulation de l'ensemble des chariots selon le principe de taquinage.

La deuxième partie peut former un carrousel de circulation des chariots en permettant le déplacement des chariots autour d'un point central de la deuxième partie, ce déplacement des chariots définissant au moins partiellement le contour d'une forme géométrique, par exemple d'une forme polygonale, notamment carrée, rectangulaire, en losange, entre autres.

Ledit au moins un plan est, selon l'invention, un plan horizontal de l'aéronef.

La première partie peut être semblable à un meuble d'office de fond de cabine conventionnel. En particulier, la première partie peut comporter toutes les fonctionnalités habituelles liées à la préparation de la nourriture. Par exemple, la première partie peut comporter un lavabo, un plan de travail, une poubelle, du matériel de nettoyage, du matériel technique du type four, distributeur de liquide chaud et/ou froid, du matériel de stockage, entre autres.

La première partie peut également être configurée pour permettre le stockage d'au moins une partie de la pluralité de chariots.

La première partie peut comporter un ou plusieurs panneaux d'isolation, situés notamment à l'interface entre les première et deuxième parties. La première partie peut être réfrigérée au moins partiellement, en général partiellement.

La deuxième partie peut permettre le déplacement des chariots les uns par rapport aux autres.

La deuxième partie peut être non accessible pour l'utilisateur. La deuxième partie peut, le cas échéant, être au moins partiellement, voire totalement, réfrigérée. La deuxième partie peut avoir une capacité variable de stockage des chariots. Par exemple, la deuxième partie peut permettre de stocker jusqu'à environ 15 chariots.

Les première et deuxième parties sont, selon l'invention, non superposées l'une par rapport à l'autre.

La base de la deuxième partie est, selon l'invention, surélevée par rapport à la base de la première partie, par exemple d'une hauteur sensiblement égale à la moitié de la hauteur d'un chariot. Cette surélévation de la base de la deuxième partie par rapport à la base de la première partie peut permettre d'occuper de façon efficace l'espace disponible dans le volume pressurisé situé à l'arrière du fuselage de l'aéronef.

La deuxième partie peut comporter des moyens de distribution sous la forme d'un dispositif d'élévation de chariot pour permettre la distribution d'au moins un chariot depuis la première partie vers la deuxième partie et inversement. La première partie peut comporter un accès pour permettre le passage d'au moins un chariot vers le dispositif d'élévation de la deuxième partie.

Le dispositif d'élévation peut comporter un plateau élévateur, destiné à recevoir un chariot à distribuer depuis la première partie vers la deuxième partie ou inversement, configuré pour se déplacer selon une direction donnée entre une première position sensiblement dans le plan de la base de la première partie et une deuxième position sensiblement dans le plan de la base de la deuxième partie. Le plateau élévateur peut être configuré pour se déplacer sensiblement verticalement selon ladite direction donnée.

Le dispositif d'élévation peut comporter au moins un moteur électrique pour permettre l'élévation ou l'abaissement du plateau élévateur. En particulier, le plateau peut être apte à coulisser pendant l'élévation ou l'abaissement le long de bras de coulissement, par exemple constitués par des vis sans fin, et un moteur électrique peut être prévu pour chaque bras de coulissement. Le dispositif d'élévation peut par exemple comporter quatre moteurs électriques, notamment des moteurs pas à pas synchronisés pour permettre d'assurer notamment une horizontalité contrôlée du plateau élévateur, associés à quatre bras de coulissement.

La première partie et/ou la deuxième partie peuvent comporter des moyens de distribution sous la forme d'au moins un système d'insertion (ou gobage) et d'extraction d'au moins un chariot pour permettre la distribution dudit au moins un chariot depuis la deuxième partie vers la première partie ou inversement.

Le système d'insertion et d'extraction peut comporter une fourche escamotable, apte à prendre appui sur au moins une roue dudit au moins un chariot à distribuer. En particulier, la fourche peut être apte à pivoter entre une première position dans laquelle au moins une roue dudit au moins un chariot est bloquée par la fourche, s'étendant de part et d'autre de la roue, pour permettre l'insertion ou l'extraction dudit au moins un chariot, et une deuxième position dans laquelle la fourche n'a aucune action sur une roue dudit au moins chariot permettant le placement dudit au moins un chariot avant insertion pour son stockage ou l'enlèvement dudit au moins un chariot après extraction pour son utilisation.

Le pivotement de la fourche, en particulier pour permettre le passage de la première position à la deuxième position et réciproquement, peut être rendu possible grâce à un positionnement adapté de la fourche relativement à la roue du chariot. Par exemple, la fourche peut être située sensiblement au niveau de la partie inférieure ou supérieure de la roue, voire au niveau de la partie centrale de la roue. La garde au sol du chariot peut être supérieure ou égale à la longueur d'un bras de la fourche, voire encore supérieure ou égale à deux fois la longueur d'un bras de la fourche. Une cuvette peut en outre être prévue dans la base de la première partie et/ou dans la base de la deuxième partie, voire encore dans le plancher du chariot, pour permettre le passage de la fourche.

La fourche peut être montée de façon coulissante sur un bras d'insertion et d'extraction. Le bras d'insertion et d'extraction peut par exemple comporter une vis sans fin.

Le système d'insertion et d'extraction peut encore comporter un moteur électrique pour commander le coulissement de la fourche le long du bras d'insertion et d'extraction.

Au moins deux systèmes d'insertion et d'extraction peuvent être situés de part et d'autre dudit au moins un chariot, notamment pour permettre d'exercer une force d'insertion ou d'extraction sur l'ensemble des roues dudit au moins un chariot.

Avantageusement, la deuxième partie comporte des moyens de déplacement des chariots selon les première et deuxième directions principales sensiblement perpendiculaires entre elles. La deuxième partie peut ainsi former un carrousel dit « angulaire ».

La deuxième partie peut comporter au moins un tapis roulant pour permettre le transport des chariots, en particulier selon la première direction principale. Le tapis roulant peut permettre le déplacement automatisé d'un chariot selon un mode de transport dans lequel les roues du chariot sont sensiblement perpendiculaires au tapis roulant et ne sont pas sollicitées.

La deuxième partie peut comporter au moins deux tapis roulants, notamment aptes à fonctionner dans des sens différents de déplacement selon la première direction principale, voire trois, voire quatre tapis roulants.

Le plateau élévateur peut comporter au moins un tapis roulant, notamment deux tapis roulants.

La deuxième partie peut comporter au moins un système de poussage pour permettre le roulage des chariots, en particulier selon la deuxième direction principale.

Le système de poussage peut comporter un dispositif de palette de poussage escamotable, apte à prendre appui sur une face d'un chariot à faire rouler. En particulier, le dispositif de palette de poussage peut comporter une palette de poussage, destinée à prendre appui sur la face du chariot à faire rouler, notamment pivotable entre une première position dans laquelle la palette de poussage est au contact de la face du chariot pour permettre le poussage du chariot selon au moins un sens de la deuxième direction principale, et une deuxième position dans laquelle la palette de poussage n'a aucune action sur le chariot permettant le stockage du chariot, temporaire ou définitif.

Le dispositif de palette de poussage peut être monté de façon coulissante sur un bras de poussage. Le bras de poussage peut par exemple comporter une vis sans fin.

Le système de poussage peut encore comporter un moteur électrique pour commander le coulissement du dispositif de palette de poussage le long du bras de poussage.

Au moins deux systèmes de poussage peuvent être utilisés pour permettre le poussage d'un chariot selon les deux sens différents de la deuxième direction principale.

Le système de poussage peut être positionné de façon à optimiser le positionnement du centre de gravité de l'ensemble formé par le chariot et le système de poussage. Le système de poussage peut ainsi être positionné sensiblement au tiers de la hauteur d'un chariot à faire rouler. De la sorte, il peut être possible de limiter, voire d'éviter, tout risque de basculement du chariot.

La deuxième partie peut avantageusement être configurée pour permettre un déplacement automatique ou semi-automatique des chariots les uns par rapport aux autres. En particulier, le déplacement des chariots de la deuxième partie vers la première partie peut être préalablement programmé.

La première partie peut comporter une interface de commande du fonctionnement de la deuxième partie.

Le meuble peut comporter un témoin d'alerte visuel et/ou sonore pour prévenir l'utilisateur de la présence d'un chariot à extraire et/ou de la présence d'un emplacement (ou espace) vide pour la dépose d'un chariot dans la première partie.

Selon l'invention, le meuble est intégré à l'arrière du fuselage de l'aéronef, dans un volume pressurisé situé au moins partiellement sous la dérive de l'aéronef. Plus particulièrement, le meuble peut être incorporé dans la partie arrière de l'aéronef située sous la dérive, habituellement non pressurisée et non aménagée, grâce à un déplacement de la cloison pressurisée de la cabine vers le fond de l'aéronef.

L'invention a encore pour objet, selon un autre de ses aspects, un procédé de stockage et/ou d'utilisation d'un chariot mis en œuvre au moyen d'un meuble tel que défini précédemment.

L'invention a notamment pour objet un procédé selon la revendication 13 de stockage et/ou d'utilisation d'au moins un chariot d'une pluralité de chariots d'un meuble pour aéronef comportant :
- une première partie formant interface d'utilisation pour un utilisateur, et
- une deuxième partie permettant le stockage et/ou l'acheminement vers l'utilisateur d'au moins un chariot,
le procédé comportant les étapes suivantes :
- prise et/ou dépose d'au moins un chariot dans la première partie du meuble,
- mise en circulation d'au moins une partie des chariots selon au moins des première et deuxième directions principales sensiblement perpendiculaires entre elles, au moins dans un plan de l'aéronef,
- distribution d'au moins un chariot depuis la deuxième partie vers la première partie ou inversement.

Lors de la mise en circulation de chariots, le déplacement d'un chariot peut permettre la libération d'un espace qui devient alors disponible pour être occupé par un autre chariot.

La deuxième partie peut former un carrousel de circulation de chariots en permettant le déplacement de chariots autour d'un point central de la deuxième partie, ce déplacement de chariots définissant au moins partiellement le contour d'une forme géométrique.

Le procédé selon l'invention comporte en outre l'étape suivante :
- élévation et/ou abaissement dudit au moins un chariot respectivement depuis la base de la première partie vers la base de la deuxième partie ou inversement.

### BRÈVE DESCRIPTION DES DESSINS

L'invention pourra être mieux comprise à la lecture de la description détaillée qui va suivre, d'un exemple de mise en œuvre non limitatif de celle-ci, ainsi qu'à l'examen des figures, schématiques et partielles, du dessin annexé, sur lequel :
- la figure 1 représente, partiellement et en perspective, un exemple d'aéronef comportant un meuble selon l'invention,
- la figure 2 représente, en perspective, le meuble de la figure 1 dans lequel sont stockés des chariots,
- la figure 3 représente, en perspective, le meuble de la figure 1 dépourvu de chariot,
- la figure 4 est une vue, en coupe partielle, de l'aéronef de la figure 1,
- les figures 5A et 5B illustrent, schématiquement et en vue de dessus, un déplacement possible de chariots de la deuxième partie du meuble de la figure 1,
- la figure 6 illustre, schématiquement, un cheminement possible d'un chariot depuis la première partie vers la deuxième partie du meuble de la figure 1,
- les figures 7A, 7B et 7C illustrent la mise en œuvre d'un système d'insertion et d'extraction de chariots d'un meuble selon l'invention,
- les figures 8A et 8B illustrent la mise en œuvre d'un dispositif d'élévation d'un meuble selon l'invention,
- la figure 9 illustre, schématiquement, une configuration de la base de la deuxième partie d'un meuble selon l'invention pour permettre le roulage et le transport de chariots,
- les figures 10A, 10B, 10C et 10D illustrent la mise en œuvre du mode transport par tapis roulant d'un meuble selon l'invention, et
- les figures 11A, 11B, 11C et 11D illustrent la mise en œuvre du mode roulage par système de poussage d'un meuble selon l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ D'UN MODE DE RÉALISATION PARTICULIER

On décrit ci-après un exemple de mise en œuvre de l'invention en référence à un aéronef 10 selon l'invention comportant un meuble 1, en particulier un meuble d'office 1.

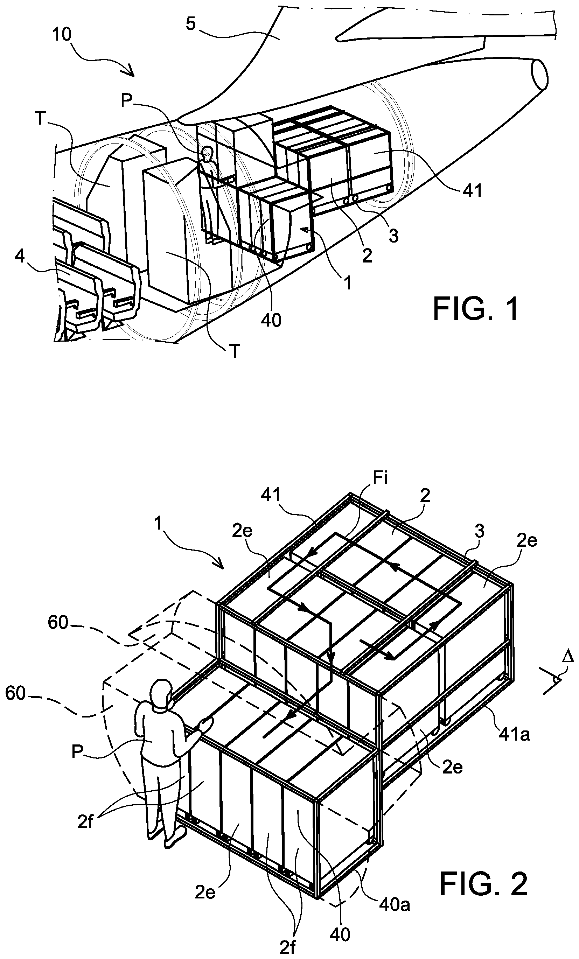

On a représenté sur la figure 1, en perspective et partiellement, la partie arrière du fuselage d'un aéronef 10 comportant un meuble d'office 1 selon l'invention.

Le meuble d'office 1 est intégré dans un volume du fuselage de l'aéronef 10, habituellement non occupé, qui est situé sous la dérive 5 de l'aéronef 10, en particulier dans une zone située en arrière des sièges 4 pour passagers et des cabines de toilettes T.

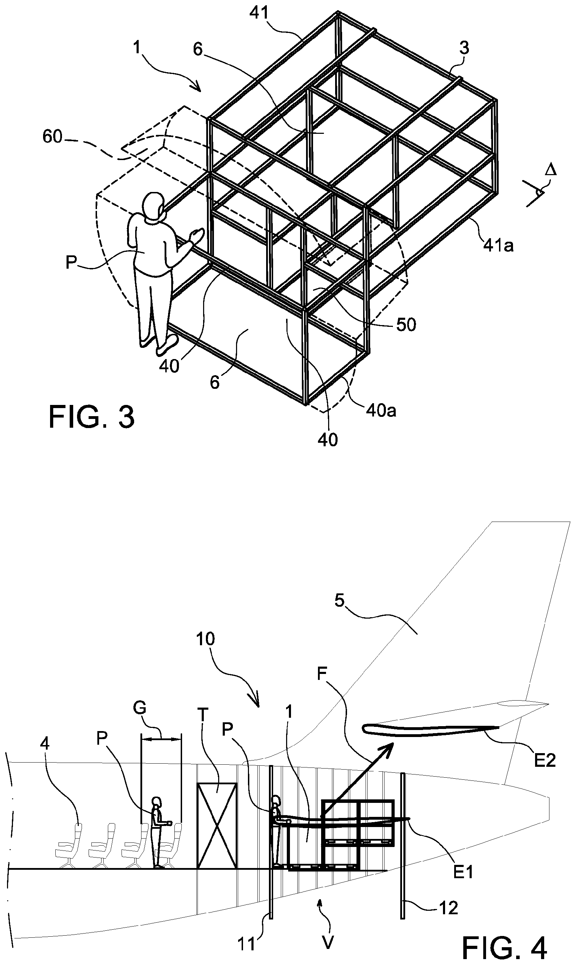

Plus spécifiquement, comme on peut le voir sur la figure 4, le meuble d'office 1 est situé en arrière de la cloison pressurisée habituelle 11 sur un aéronef, laquelle est déplacée pour former une nouvelle cloison pressurisée 12 pare-feu, située juste en avant du générateur auxiliaire de puissance (APU).

De la sorte, le déplacement de la cloison pressurisée 11 vers la nouvelle cloison pressurisée 12 permet de gagner un volume pressurisé V dans lequel est intégré le meuble d'office 1. L'empennage de l'aéronef 10 est alors déplacé depuis une position habituelle E1 vers une nouvelle position E2 selon la flèche F, comme représenté sur la figure 4.

Avantageusement, l'aménagement du meuble d'office 1 selon l'invention dans ce nouveau volume pressurisé V, situé au moins partiellement sous la dérive 5, peut permettre l'implantation de sièges 4 supplémentaires. On peut ainsi obtenir un gain G en sièges 4, comme représenté sur la figure 4. Par exemple, le gain G peut correspondre à huit sièges 4 supplémentaires pour un aéronef 10 de taille moyenne d'environ 200 passagers habituellement.

Les figures 2 et 3 représentent, en perspective, le meuble d'office 1 selon l'invention respectivement avec et sans la présence de chariots 2. Les chariots 2 peuvent permettre le stockage d'éléments divers pour l'aéronef 10. De préférence, les chariots sont utilisés pour le stockage et/ou la préparation de nourriture.

Conformément à l'invention, le meuble d'office 1 comporte une première partie 40 formant interface d'utilisation pour un utilisateur P permettant la prise et/ou la dépose d'au moins un chariot 2 dans le meuble d'office 1, et une deuxième partie 41 permettant la mise en circulation des chariots 2 selon des première C1 et deuxième C2 directions principales sensiblement perpendiculaires entre elles, au moins dans un plan Δ horizontal de l'aéronef 10, pour le stockage et/ou acheminement vers l'utilisateur P d'au moins un chariot 2.

De plus, la première partie 40 et/ou la deuxième partie 41 comportent des moyens de distribution d'au moins un chariot 2 depuis la deuxième partie 41 vers la première partie 40 et inversement.

La première partie 40 constitue une zone de stockage de chariots 2 et une zone tampon pour l'insertion et/ou l'extraction manuelle classique de chariots 2, accessibles à l'utilisateur P, tandis que la deuxième partie 41 constitue une zone de stockage de chariots 2 et une zone de distribution automatique ou semi-automatique de chariots 2, non accessibles à l'utilisateur P.

Le meuble d'office 1 peut être formé par un ensemble châssis 3 définissant les première 40 et deuxième 41 parties, comme on peut le voir sur la figure 3.

La première partie 40 peut comporter des panneaux d'isolation 60 situés à l'interface entre les première 40 et deuxième 41 parties, empêchant notamment l'accès pour l'utilisateur P à la deuxième partie 41.

De tels panneaux d'isolation 60 peuvent par exemple être formés à partir d'un matériau composite, revêtu éventuellement d'un film décoratif.

La base 40a de la première partie 40 et la base 41a de la deuxième partie 41 peuvent être formées par des panneaux 6 placés sur l'ensemble châssis 3 du meuble d'office 1.

La première partie 40 et/ou la deuxième partie 41 peuvent, le cas échéant, être réfrigérées au moins partiellement, notamment pour permettre la conservation de la nourriture stockée.

Afin de pouvoir s'adapter à la forte évolution de section de la partie arrière du fuselage de l'aéronef 10, la base 41a de la deuxième partie 41 est surélevée par rapport à la base 40a de la première partie 40.

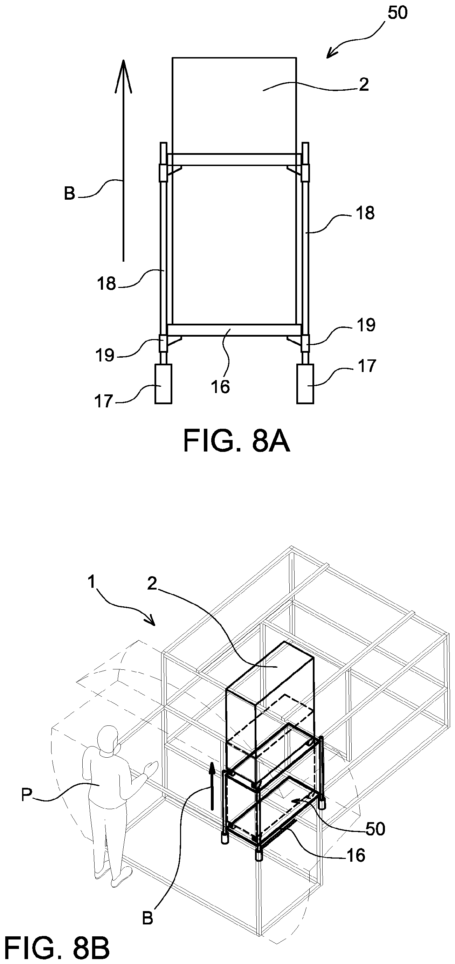

En outre, la deuxième partie 41 peut comporter des moyens de distribution sous la forme d'un dispositif d'élévation 50 de chariot 2 pour permettre la distribution d'un chariot 2 depuis la première partie 40 vers la deuxième partie 41 et inversement. Un tel dispositif d'élévation 50 est par la suite davantage décrit en référence aux figures 8A et 8B.

Le meuble d'office 1 peut comporter des chariots 2e à déplacement automatique et/ou semi-automatique, en particulier dans la deuxième partie 41 et pour le chariot central 2e de la première partie 40, et des chariots 2f fixes seulement déplaçables par une action manuelle de l'utilisateur P.

Pour permettre la circulation des chariots 2 du meuble d'office 1, au moins un espace (ou emplacement) de stockage d'un chariot 2 peut être laissé vacant de façon à permettre un mouvement par taquinage des chariots 2. A titre d'exemple, l'extraction du chariot 2e central de la première partie 40, sur la figure 2, peut permettre de libérer un espace pour réaliser un déplacement selon la flèche Fᵢ d'un chariot situé dans la deuxième partie 41 du meuble d'office 1, selon un principe de jeu de taquin.

La deuxième partie 41 peut former un carrousel de circulation des chariots 2 et permettre le déplacement des chariots 2 autour d'un point central de la deuxième partie 41, ce déplacement des chariots 2 définissant au moins partiellement le contour d'une forme géométrique. En particulier, dans l'exemple représenté, le déplacement des chariots 2 peut former le contour d'une forme carrée.

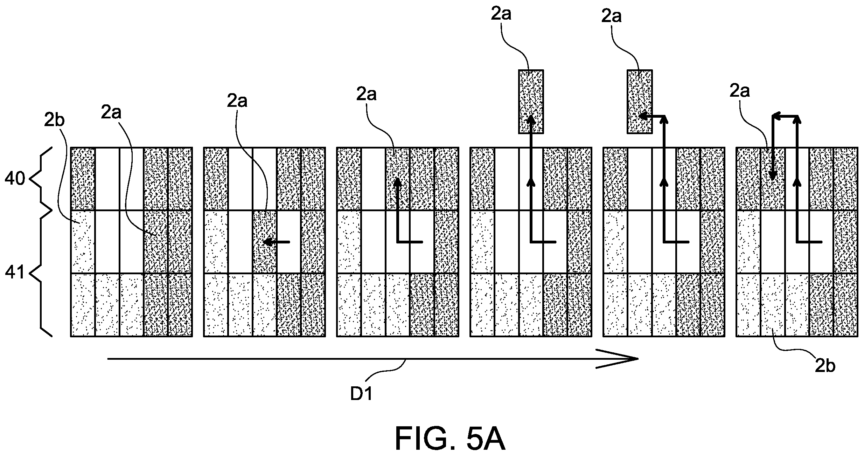

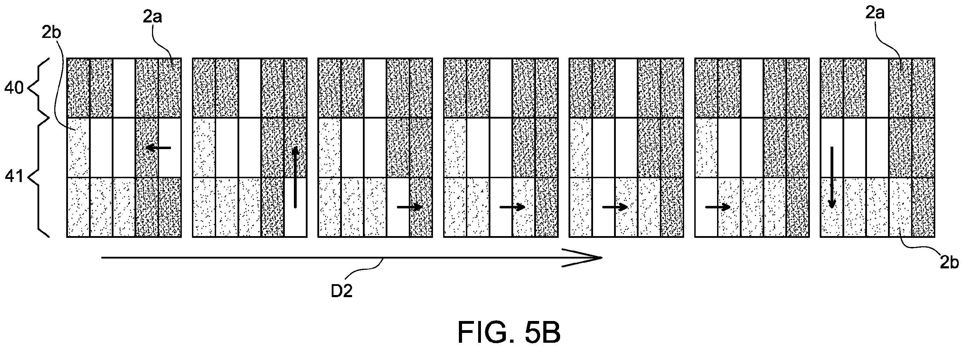

Les figures 5A et 5B illustrent des procédés de déplacement (ou taquinage) de chariots 2 au niveau de la deuxième partie 41 du meuble d'office 1.

En particulier, la figure 5A illustre un séquençage pour déplacer un chariot plein 2a, situé dans la deuxième partie 41, pour l'extraire et l'amener dans un emplacement tampon de réserve de la première partie 40. Sur la figure 5A, l'ordre des étapes est figuré par la flèche D1.

La figure 5B illustre, quant à elle, un séquençage de réinitialisation en vu d'une prochaine manipulation impliquant le déplacement de chariots pleins 2a et vides 2b selon l'ordre des étapes matérialisées par la flèche D2.

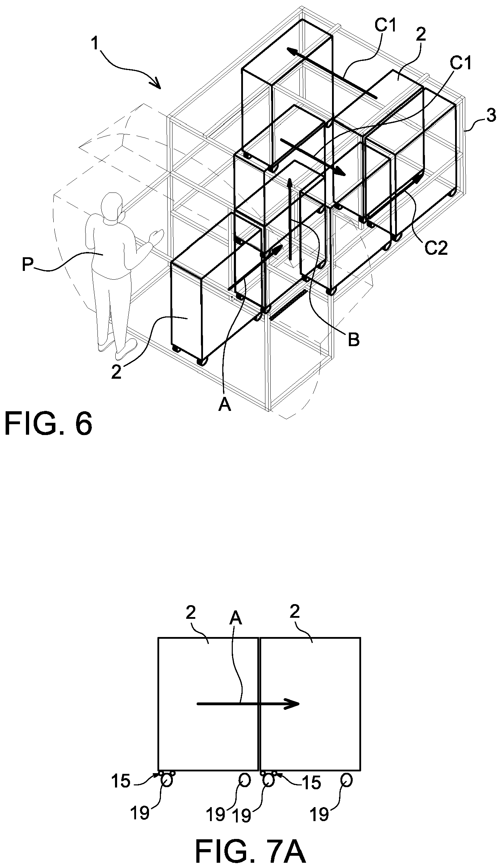

La figure 6 illustre, schématiquement et en perspective, le principe général d'utilisation du meuble d'office 1 par un utilisateur P pour, par exemple, amener un chariot 2 en configuration de stockage dans la deuxième partie 41.

L'utilisateur P peut d'abord insérer le chariot 2 selon une direction A sensiblement horizontale au cours d'une phase d'insertion depuis la première partie 40 vers la deuxième partie 41. Puis, le chariot 2 est élevé selon une direction B sensiblement verticale vers la base 41a de la deuxième partie 41. A ce stade, la circulation du chariot 2 se fait selon la première direction C1 sensiblement horizontale et la deuxième direction C2 sensiblement horizontale, perpendiculaires entre elles. Le déplacement selon la première direction principale C1 se fait selon un mode de roulage du chariot 2 et le déplacement selon la deuxième direction principale C2 se fait selon un mode de transport du chariot 2.

L'utilisation du meuble d'office 1 pour l'utilisateur P, par exemple le personnel de bord, est donc relativement simple.

Le service à bord peut par exemple être réalisé en premier avec les chariots 2 situés dans la première partie 40, accessibles instantanément manuellement comme pour un meuble de stockage conventionnel.

Les chariots 2 stockés dans la deuxième partie 41 peuvent, quant à eux, être pré-ordonnés au mieux par rapport aux besoins pendant le vol de l'aéronef 10.

La circulation des chariots 2 dans la deuxième partie 41 peut être déterminée pour faire circuler les chariots 2 dans un sens unique de façon à obtenir le meilleur rapport d'efficacité par rapport à la simplicité.

Au fur et à mesure des besoins, il est possible d'extraire un à un des chariots 2 pleins de la deuxième partie 41 et d'insérer des chariots 2 vides dans la deuxième partie 41 selon un principe de taquinage. Les chariots 2 pleins extraits depuis le meuble d'office 1 peuvent être soit directement utilisés, soit placés dans un emplacement de stockage de la première partie 40. La disponibilité et/ou l'absence d'un chariot 2 au niveau de la première partie 40 peut être signifiée à un utilisateur P à l'aide d'un témoin visuel et/ou sonore.

La première partie 40 peut comporter, le cas échéant, un tableau de commande pour permettre une programmation entière ou semi-automatique du fonctionnement du meuble d'office 1.

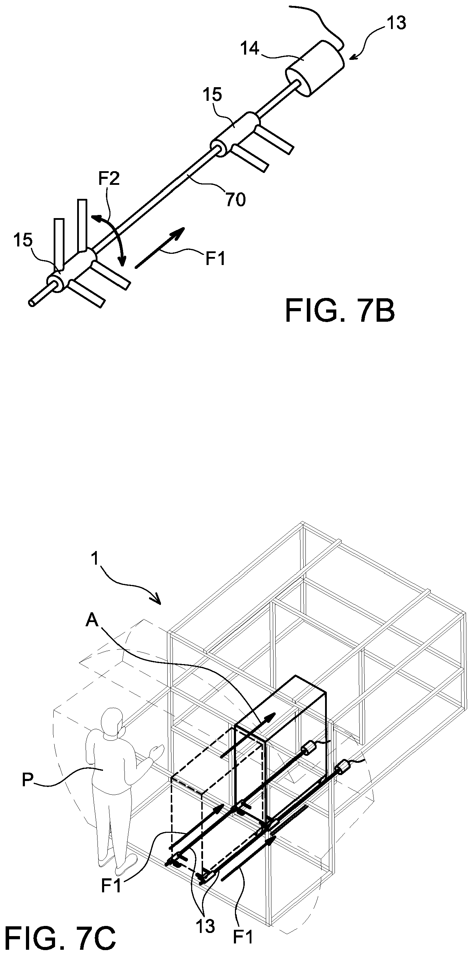

Les figures 7A et 7B et 7C illustrent le principe du mécanisme permettant l'insertion (ou gobage) et/ou l'extraction d'un chariot 2 depuis la première partie 40 vers la deuxième partie 41 et inversement.

L'insertion et/ou l'extraction se fait par l'intermédiaire d'au moins un système d'insertion et d'extraction 13, notamment deux systèmes d'insertion et d'extraction 13 situés de part et d'autre du chariot 2 à déplacer, comme on peut le voir sur la figure 7C.

La figure 7B représente un exemple d'un tel système d'insertion et d'extraction 13.

Celui-ci comporte une fourche 15 escamotable, montée de façon coulissante sur un bras d'insertion et d'extraction 70, par exemple une vis sans fin. Le coulissement est notamment rendu possible par l'intermédiaire d'un moteur électrique 14 commandant le déplacement de la fourche 15 selon la flèche F1 pour son coulissement et selon la flèche F2 pour son pivotement entre des positions permettant respectivement le blocage d'une roue 19 du chariot 2 pour permettre son déplacement et la libération du chariot 2 pour sa manipulation par l'utilisateur P. Le positionnement de la fourche 15 relativement à la roue 19 peut être déterminé de sorte à permettre un débattement suffisant de la fourche 15 autour de la roue 19 pour autoriser son pivotement entre les positions permettant le blocage de la roue 19 et la libération de la roue 19.

La symétrisation du principe d'insertion et/ou d'extraction par le positionnement de deux systèmes d'insertion et d'extraction 13 de part et d'autre du chariot 2 permet d'obtenir la poussée axiale selon la direction A.

Les figures 8A et 8B illustrent, de façon schématique, le principe de fonctionnement du dispositif élévateur 50 permettant l'acheminement d'un chariot 2 depuis la base 40a de la première partie 40 vers la base 41a de la deuxième partie 41, ou l'inverse, selon la direction sensiblement verticale B.

Le dispositif d'élévation 50 comporte un plateau élévateur 16, qui repose par exemple sur quatre supports de plateau 19 montés de façon coulissante sur quatre bras de coulissement 18, par exemple des vis sans fin. L'élévation et/ou l'abaissement du plateau élévateur 16 reposant sur les supports de plateau 19 peuvent être rendus possible par l'intermédiaire de quatre moteurs électriques 17, notamment des moteurs électriques pas à pas synchronisés pour permettre d'assurer une horizontabilité contrôlée du plateau élévateur 16.

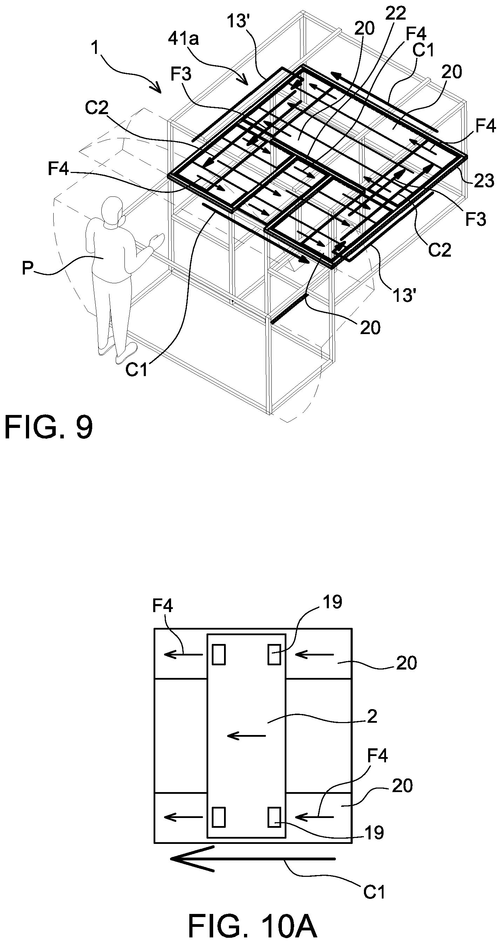

La figure 9 illustre, en perspective, un exemple de configuration de la base 41a de la deuxième partie 41 pour permettre le déplacement des chariots 2 selon les première C1 et deuxième C2 directions principales perpendiculaires entre elles, associées respectivement aux modes de déplacement par transport et par roulage.

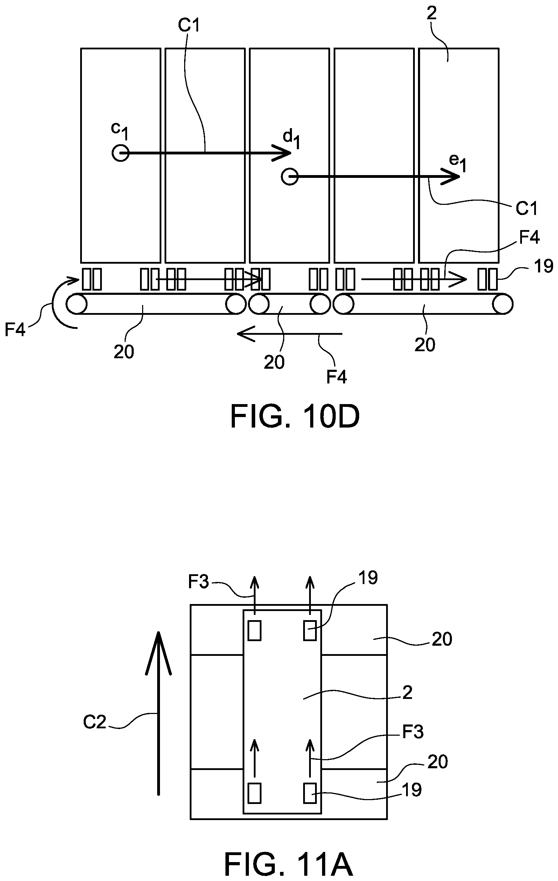

Plus particulièrement, la base 41a peut comporter un cadre périmétrique 23 à l'intérieur duquel figurent des systèmes de poussage 13', décrits plus précisément par la suite en référence aux figures 11A à 11D, pour permettre un déplacement selon les flèches F3 des chariots 2 selon un mode de roulage. Des tapis roulants 20 permettent le déplacement des chariots 2 selon les flèches F4 selon un mode de transport. Une barrière séparatrice 22 peut être prévue pour délimiter la zone de la base 41a de la deuxième partie 41 permettant un déplacement selon un premier sens de la première direction principale C1 et la zone de la base 41a de la deuxième partie 41 permettant un déplacement selon le sens opposé de la première direction principale C1.

Les figures 10A à 10D illustrent plus spécifiquement le déplacement des chariots 2 selon le mode de transport, utilisant des tapis roulants 20.

Dans ce mode, des tapis roulants 20 sont prévus pour permettre un déplacement passif des chariots 2 selon la première direction principale C1, les roues 19 des chariots 2 étant placées de façon perpendiculaire au déplacement selon les flèches F4 des tapis roulants 20.

Les tapis roulants 20 peuvent être intégrés et motorisés de façon indépendante dans la deuxième partie 41.

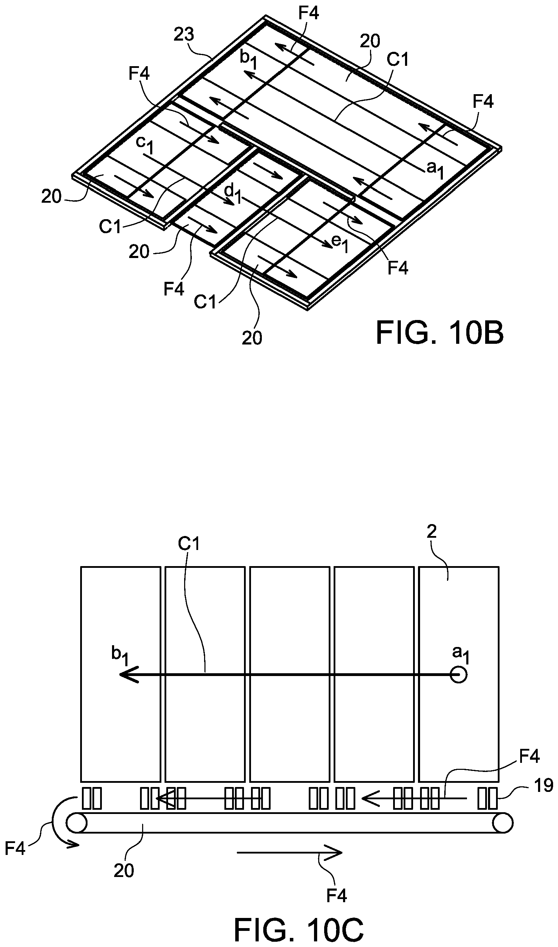

La figure 10B représente schématiquement des déplacements possibles d'un chariot 2 depuis une zone a₁ vers une zone b₁, et depuis une zone c₁ vers une zone e₁ avec passage intermédiaire par une zone d₁.

La figure 10C représente plus particulièrement, en coupe, l'utilisation d'un seul tapis roulant 20 pour permettre le passage de la zone a₁ vers la zone b₁.

La figure 10D représente quant à elle, en coupe, les détails pour permettre le passage de la zone c₁ vers la zone d₁ puis la zone e₁ avec l'utilisation de trois tapis roulants 20. En particulier, le tapis roulant 20 intermédiaire, qui correspond à la zone d₁, peut être situé sur le plateau élévateur 16 du dispositif d'élévation 50. Le passage du chariot 2 d'un tapis roulant 20 à un autre adjacent peut être facilité par un choix adapté de la géométrie des tapis roulants 20, afin notamment d'obtenir une zone de jonction sensiblement plane entre les tapis roulants 20 adjacents. Il peut également être facilité par la présence de plusieurs roues juxtaposées sur le chariot 2, en particulier deux roues, de sorte à ce qu'au moment du passage d'un tapis roulant 20 à un autre adjacent, au moins une roue du chariot 2 se situe sur chaque tapis roulant 20.

Les figures 11A à 11D sont plus spécifiquement relatives au déplacement de chariots 2 selon le mode de roulage, selon la deuxième direction principale C2.

Comme il est représenté sur la figure 11A, le chariot 2 comporte des roues 19 orientées parallèlement à la deuxième direction principale C2 pour permettre le roulage du chariot 2. Dans ce mode de roulage, les tapis roulants 20 sont à l'arrêt et les chariots 2 sont aptes à rouler sur ces derniers en traversant également des planchers fixes situés entre les tapis roulants 20.

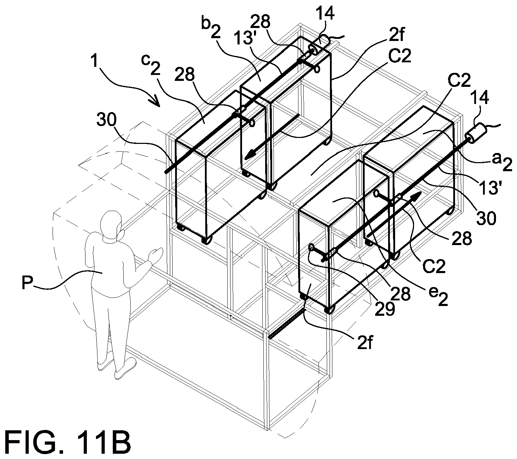

Le déplacement des chariots 2 en mode de roulage est assuré par l'intermédiaire d'au moins un système de poussage 13', notamment deux systèmes de poussage 13', à savoir un pour chaque sens de déplacement selon la deuxième direction principale C2, comme représenté sur la figure 11B.

Le système de poussage 13' comporte un dispositif de palette de poussage 28 escamotable, apte à prendre appui sur une face 2f d'un chariot 2 à faire rouler, le dispositif de palette de poussage 28 étant monté de façon coulissante sur un bras de poussage 30, par exemple une vis sans fin.

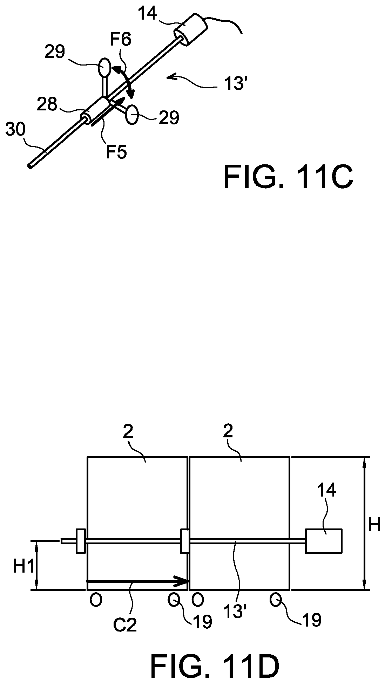

Un moteur électrique 14 peut être prévu pour permettre le coulissement du dispositif de palette de poussage 28 le long du bras de poussage 30 selon la flèche F5, comme représenté sur la figure 11C. En outre, le moteur électrique 14 peut permettre le pivotement d'une palette de poussage 29 du dispositif de palette de poussage 28 selon la flèche F6 entre une position dans laquelle la palette de poussage 29 est placée contre la face 2f du chariot 2 pour permettre son déplacement et une position dans laquelle la palette de poussage 29 n'a aucune action sur le chariot 2 de façon à permettre le stockage du chariot 2.

Comme on peut le voir sur la figure 11B, le meuble d'office 1 peut comporter un premier système de poussage 13' permettant le déplacement d'un chariot 2 depuis une position b₂ vers une position c₂, et un deuxième système de poussage 13' permettant le déplacement d'un chariot 2 depuis une première position e₂ vers une deuxième a₂.

Par ailleurs, le système de poussage 13' peut être positionné sensiblement au tiers H1 de la hauteur H du chariot 2 à faire rouler, comme on peut le voir sur la figure 11D, de façon à éviter, ou du moins à limiter, tout risque de basculement du chariot 2. Le positionnement au tiers H1 de la hauteur H du chariot 2 correspond notamment à un positionnement optimisé au regard du centre de gravité de l'ensemble formé par le chariot 2 et le système de poussage 13'.

Bien entendu, l'invention n'est pas limitée à l'exemple de réalisation qui vient d'être décrit. Diverses modifications peuvent y être apportées par l'homme du métier.

En particulier, le système de poussage 13 peut être différent de celui présenté. Il peut par exemple comporter un vérin télescopique pour permettre le déplacement d'un chariot 2.

La deuxième partie 41 peut être modifiée, notamment par symétrisation des systèmes de poussage 13 et fonctionnement réversible des tapis roulant 20, pour permettre une circulation des chariots 2 dans les deux sens des première C1 et deuxième C2 directions principales. De la sorte, la circulation des chariots 2 pourrait être plus rapide.

La base 41a de la deuxième partie 41 est, selon l'invention, décalée par rapport à la base 40a de la première partie 40, et donc décalée par rapport au sol de la cabine, puisque le meuble d'office 1 est installé dans la partie arrière du fuselage de l'aéronef 10 à forte conicité.

## Revendications

1. Aéronef (10), comportant un meuble (1) intégré à l'arrière du fuselage de l'aéronef (10), dans un volume pressurisé situé au moins partiellement sous la dérive (5) de l'aéronef (10), le meuble (1) comportant :
- une pluralité de chariots (2),
- une première partie (40) formant interface d'utilisation pour un utilisateur (P) permettant la prise et/ou la dépose d'au moins un chariot (2) dans le meuble (1), et comportant une base (40a) de la première partie (40),
- une deuxième partie (41) permettant la mise en circulation des chariots (2) sur une base (41a) de la deuxième partie (41) selon au moins des première (C1) et deuxième (C2) directions principales sensiblement perpendiculaires entre elles, au moins dans un plan horizontal (Δ) de l'aéronef (10), pour le stockage et/ou l'acheminement vers l'utilisateur (P) d'au moins un chariot (2),
les première (40) et deuxième (41) parties étant non superposées l'une par rapport à l'autre, et les première (40) et deuxième (41) parties étant décalées dans la direction longitudinale de l'aéronef, la première partie (40) et/ou la deuxième partie (41) comportant des moyens de distribution d'au moins un chariot (2) depuis la base (41a) de la deuxième partie (41) vers la base (40a) de la première partie (40) et inversement,
la base (41a) de la deuxième partie (41) étant surélevée par rapport à la base (40a) de la première partie (40).

2. Aéronef selon la revendication 1, **caractérisé en ce que**, lors de la mise en circulation des chariots (2), la deuxième partie (41) est configurée pour permettre la libération d'un espace lors du déplacement d'un chariot (2), cet espace alors disponible étant destiné à être occupé par un autre chariot (2).

3. Aéronef selon la revendication 1 ou 2, **caractérisé en ce que** la deuxième partie (41) forme un carrousel de circulation des chariots (2) en permettant le déplacement des chariots (2) autour d'un point central de la deuxième partie (41), ce déplacement des chariots (2) définissant au moins partiellement le contour d'une forme géométrique.

4. Aéronef selon l'une des revendications précédentes, **caractérisé en ce que** la deuxième partie (41) comporte des moyens de distribution sous la forme d'un dispositif d'élévation (50) de chariot pour permettre la distribution d'au moins un chariot (2) depuis la première partie (40) vers la deuxième partie (41) et inversement.

5. Aéronef selon la revendication 4, **caractérisé en ce que** le dispositif d'élévation (50) comporte un plateau élévateur (16), destiné à recevoir un chariot (2) à distribuer depuis la première partie (40) vers la deuxième partie (41) ou inversement, configuré pour se déplacer selon une direction donnée (B) entre une première position sensiblement dans le plan de la base (40a) de la première partie (40) et une deuxième position sensiblement dans le plan de la base (41a) de la deuxième partie (41).

6. Aéronef selon l'une quelconque des revendications précédentes, **caractérisé en ce que** la première partie (40) et/ou la deuxième partie (41) comportent des moyens de distribution sous la forme d'au moins un système d'insertion et d'extraction (13) d'au moins un chariot (2) pour permettre la distribution dudit au moins un chariot (2) depuis la deuxième partie (41) vers la première partie (40) ou inversement, le système d'insertion et d'extraction (13) comportant une fourche (15) escamotable, apte à prendre appui sur au moins une roue (19) dudit au moins un chariot (2) à distribuer, la fourche (15) étant montée de façon coulissante sur un bras d'insertion et d'extraction (70).

7. Aéronef selon l'une quelconque des revendications précédentes, **caractérisé en ce que** la deuxième partie (41) comporte au moins un tapis roulant (20) pour permettre le transport des chariots (2).

8. Aéronef selon l'une quelconque des revendications précédentes, **caractérisé en ce que** la deuxième partie (41) comporte au moins un système de poussage (13') pour permettre le roulage des chariots (2).

9. Aéronef selon la revendication 8, **caractérisé en ce que** le système de poussage (13') comporte un dispositif de palette de poussage (28) escamotable, apte à prendre appui sur une face (2f) d'un chariot (2) à faire rouler, le dispositif de palette de poussage (28) étant monté de façon coulissante sur un bras de poussage (30).

10. Aéronef selon la revendication 8 ou 9, **caractérisé en ce que** le système de poussage (13') est positionné sensiblement au tiers (H1) de la hauteur (H) d'un chariot (2) à faire rouler.

11. Aéronef selon l'une quelconque des revendications précédentes, **caractérisé en ce que** le meuble est un meuble d'office (1).

12. Aéronef selon l'une quelconque des revendications précédentes, **caractérisé en ce que** la première partie (40) est configurée pour permettre le stockage d'au moins une partie de la pluralité de chariots (2).

13. Procédé de stockage et/ou d'utilisation d'au moins un chariot (2) d'une pluralité de chariots (2) d'un meuble (1) d'un aéronef (10) selon l'une quelconque des revendications précédentes, comportant les étapes suivantes :
- prise et/ou dépose d'au moins un chariot (2) dans la première partie (40) du meuble (1),
- mise en circulation d'au moins une partie des chariots (2) dans la deuxième partie (41) du meuble (1) selon au moins des première (C1) et deuxième (C2) directions principales sensiblement perpendiculaires entre elles, au moins dans un plan horizontal (Δ) de l'aéronef (10),
- élévation et/ou abaissement dudit au moins un chariot (2) respectivement depuis la base (40a) de la première partie (40) vers la base (41a) de la deuxième partie (41) ou inversement.

## Patentansprüche

1. Luftfahrzeug (10), welches ein hinten im Rumpf des Luftfahrzeugs (10) in einem unter Druck stehenden Volumen, das sich mindestens teilweise unter der Seitenflosse (5) des Luftfahrzeugs (10) befindet, integriertes Möbelstück (1) aufweist, wobei das Möbelstück (1) aufweist:
- eine Vielzahl von Wagen (2),
- einen ersten Teil (40), der eine Benutzerschnittstelle für einen Benutzer (P) bildet, der das Entnehmen und/oder das Abstellen von mindestens einem Wagen (2) aus dem oder in das Möbelstück (1) gestattet und eine Basis (40a) des ersten Teils (40) aufweist,
- einen zweiten Teil (41), der den Umlauf der Wagen (2) auf einer Basis (41a) des zweiten Teils (41) gestattet, gemäß mindestens einer ersten (C1) und zweiten (C2) Hauptrichtung, die etwa senkrecht zueinander sind, mindestens in einer horizontalen Ebene (Δ) des Luftfahrzeugs (10), für die Lagerung und/oder die Beförderung zu dem Benutzer (P) von mindestens einem Wagen (2), wobei der erste (40) und zweite (41) Teil zueinander nicht übereinanderliegend sind und der erste (40) und zweite (41) Teil in der Längsrichtung des Luftfahrzeugs versetzt sind,
wobei der erste Teil (40) und/oder der zweite Teil (41) Verteilungsmittel mindestens eines Wagens (2) von der Basis (41a) des zweiten Teils (41) zu der Basis (40a) des ersten Teils (40) und umgekehrt aufweisen,
wobei die Basis (41a) des zweiten Teils (41) in Bezug auf die Basis (40a) des ersten Teils (40) erhöht ist.

2. Luftfahrzeug nach Anspruch 1, **dadurch gekennzeichnet, dass** beim Umlauf der Wagen (2) der zweite Teil (41) konfiguriert ist, um die Freigabe eines Platzes bei der Verlagerung eines Wagens (2) zu gestatten, wobei dieser dann verfügbare Platz zum Besetzen durch einen anderen Wagen (2) bestimmt ist.

3. Luftfahrzeug nach Anspruch 1 oder 2, **dadurch gekennzeichnet, dass** der zweite Teil (41) ein Umlaufkarussell der Wagen (2) bildet, indem er die Verlagerung der Wagen (2) um einen zentralen Punkt des zweiten Teils (41) gestattet, wobei diese Verlagerung der Wagen (2) mindestens teilweise die Kontur einer geometrischen Form festlegt.

4. Luftfahrzeug nach einem der vorangehenden Ansprüche, **dadurch gekennzeichnet, dass** der zweite Teil (41) Verteilungsmittel in Form einer Wagenhubvorrichtung (50) aufweist, um die Verteilung von mindestens einem Wagen (2) vom ersten Teil (40) zum zweiten Teil (41) und umgekehrt zu gestatten.

5. Luftfahrzeug nach Anspruch 4, **dadurch gekennzeichnet, dass** die Hubvorrichtung (50) eine Hubplattform (16) aufweist, die zur Aufnahme eines vom ersten Teil (40) zum zweiten Teil (41) oder umgekehrt zu verteilenden Wagens (2) bestimmt ist, die konfiguriert ist, um sich gemäß einer bestimmten Richtung (B) zwischen einer ersten Position etwa in der Ebene der Basis (40a) des ersten Teils (40) und einer zweiten Position etwa in der Ebene der Basis (41a) des zweiten Teils (41) zu verlagern.

6. Luftfahrzeug nach einem der vorangehenden Ansprüche, **dadurch gekennzeichnet, dass** der erste Teil (40) und/oder der zweite Teil (41) Verteilungsmittel in Form von mindestens einem System zum Einsetzen und Herausnehmen (13) von mindestens einem Wagen (2) aufweisen, um die Verteilung des mindestens einen Wagens (2) vom zweiten Teil (41) zum ersten Teil (40) oder umgekehrt zu gestatten, wobei das System zum Einsetzen und Herausnehmen (13) eine einziehbare Gabel (15) aufweist, die zur Abstützung auf mindestens einem Rad (19) des mindestens einen zu verteilenden Wagens (2) imstande ist, wobei die Gabel (15) auf einem Arm zum Einsetzen und Herausnehmen (70) gleitend angebracht ist.

7. Luftfahrzeug nach einem der vorangehenden Ansprüche, **dadurch gekennzeichnet, dass** der zweite Teil (41) mindestens ein Förderband (20) aufweist, um den Transport der Wagen (2) zu gestatten.

8. Luftfahrzeug nach einem der vorangehenden Ansprüche, **dadurch gekennzeichnet, dass** der zweite Teil (41) mindestens ein Schubsystem (13') aufweist, um das Rollen der Wagen (2) zu gestatten.

9. Luftfahrzeug nach Anspruch 8, **dadurch gekennzeichnet, dass** das Schubsystem (13') eine einziehbare Schubflügelvorrichtung (28) aufweist, die zur Abstützung auf einer Fläche (2f) eines zu rollenden Wagens (2) imstande ist, wobei die Schubflügelvorrichtung (28) gleitend auf einem Schubarm (30) angebracht ist.

10. Luftfahrzeug nach Anspruch 8 oder 9, **dadurch gekennzeichnet, dass** das Schubsystem (13') etwa auf dem Drittel (H1) der Höhe (H) eines zu rollenden Wagens (2) positioniert ist.

11. Luftfahrzeug nach einem der vorangehenden Ansprüche, **dadurch gekennzeichnet, dass** das Möbelstück ein Büromöbelstück (1) ist.

12. Luftfahrzeug nach einem der vorangehenden Ansprüche, **dadurch gekennzeichnet, dass** der erste Teil (40) konfiguriert ist, um das Lagern von mindestens einem Teil der Vielzahl von Wagen (2) zu gestatten.

13. Verfahren zum Lagern und/oder Verwenden von mindestens einem Wagen (2) einer Vielzahl von Wagen (2) eines Möbelstücks (1) eines Luftfahrzeugs (10) nach einem der vorangehenden Ansprüche, welches die folgenden Schritte aufweist:
- Entnehmen und/oder Abstellen mindestens eines Wagens (2) im ersten Teil (40) des Möbelstücks (1),
- Umlaufen von mindestens einem Teil der Wagen (2) im zweiten Teil (41) des Möbelstücks (1) gemäß mindestens einer ersten (C1) und zweiten (C2) Hauptrichtung, die etwa senkrecht zueinander sind, mindestens in einer horizontalen Ebene (Δ) des Luftfahrzeugs (10),
- Heben und/oder Senken des mindestens einen Wagens (2) jeweils von der Basis (40a) des ersten Teils (40) zu der Basis (41a) des zweiten Teils (41) oder umgekehrt.

## Claims

1. An aircraft (10), including a piece of furniture (1) integrated at the rear of the fuselage of the aircraft (10), in a pressurized space, at least partly located under the vertical stabilizer (5) of the aircraft (10), the piece of furniture (1) comprising:
- a plurality of trolleys (2),
- a first section (40) forming the interface of use for a user (P)allowing the taking and/or the deposition of at least one trolley (2) in the piece of furniture (1), and comprising a base (40a) of the first section (40),
- a second section (41) allowing the trolleys (2) to circulate on a base (41a) of the second section (41) along at least first (C1) and second (C2) main directions perpendicular to each other, at least in one horizontal plane (Δ) of the aircraft (10), for storing and/or bringing at least one trolley (2) to the user (P), the first (40) and second (41) portions not being superposed on each other, and the fist (40) and second (41) sections being offset in the longitudinal direction of the aircraft (10),
the first section (40) and/or second section (41) including means for distributing at least one trolley (2) from the base (41a) of the second (41) section to the base (40a) of the first section and vice versa,
the base (41a) of the second section (41) being raised relatively to the base (40a) of the first section (40).

2. The aircraft according to claim 1, wherein during circulation of the trolleys (2), the second section (41) is configured so as to allow a space to be freed during the displacement of a trolley (2), this space then available being intended to be occupied by another trolley (2).

3. The aircraft according to claim 1 or 2, wherein the second section (41) forms a carousel for circulation of the trolleys (2) by allowing the displacement of the trolleys (2) around a central point of the second section (41), this displacement of trolleys (2) at least partly defining the contour of a geometrical shape.

4. The aircraft according to any preceding claim, wherein the second section (41) includes distribution means in the form of a device for raising (50) a trolley in order to allow distribution of at least one trolley (2) from the first section (40) to the second section (41) and vice versa.

5. The aircraft according to claim 4, wherein the raising device (50) includes an elevator plate (16) intended to receive a trolley (2) to be distributed from the first section (40) to the second section (41) or vice versa, configured so as to move along a given direction (B) between a first position in the plane of the base (40 a)of the first (40) section and a second position in the plane of the base (41a) of the second section (41).

6. The aircraft according to any preceding claim, wherein the first section (40)and/or the second section (41) include distribution means in the form of at least one system (13)for inserting and extracting at least one trolley (2) in order to allow distribution of said at least one trolley (2) from the second section (41) to the first section (40) or vice versa, the insertion and extraction system (13) including a retractable yoke (15) able to bear upon at least one wheel (19) of said at least one trolley (2) to be distributed, the yoke (15) being slideably mounted on an insertion and extraction arm (70).

7. The aircraft according to any preceding claim, wherein the second section (41) includes at least one conveyor belt (20) for allowing conveyance of the trolleys (2).

8. The aircraft according to any preceding claim, wherein the second section (41) includes at least one pushing system (13') for allowing rolling of the trolleys (2).

9. The aircraft according to claim 8, wherein the pushing system (13') includes a retractable pushing pallet (28) able to bear upon one face (2f) of a trolley (2) to be rolled, the pushing pallet device (28) being slideably mounted on a pushing arm (30).

10. The aircraft according to claim 8 or 9, wherein the pushing system (13') is positioned at one third (H1) of the height (H) of a trolley (2) to be rolled.

11. The aircraft according to any preceding claim, wherein the piece of furniture is a piece of galley furniture (1).

12. The aircraft according to any preceding claim, wherein the first section (40) is configured in order to allow storage of at least one portion of the plurality of trolleys (2).

13. A method for storing and/or using at least one trolley (2) from a plurality of trolleys (2) of a piece of furniture (1) for an aircraft (10) as claimed in any preceding claim, the method including the following steps:
- taking and/or depositing at least one trolley (2) in the first section (40) of the piece of furniture (1),
- circulating at least one portion of the trolleys (2) in the second section (41) of the piece of furniture (1) along at least first (C1) and second (C2) main directions perpendicular to each other, at least in one horizontal (Δ) plane of the aircraft (10),
raising and/or lowering said at least one trolley (2) respectively from the base (40a) of the first section (40) to the base (41a) of the second section (41) or vice versa.
